# NEUE EUROPÄISCHE PATENTSCHRIFT

(11) **EP 0 503 488 B2**
(45) Veröffentlichungstag und Bekanntmachung des Hinweises auf die Entscheidung über den Einspruch: **15.12.1999**
(45) Hinweis auf die Patenterteilung: 12.01.1994
(21) Anmeldenummer: 92103818.8
(22) Anmeldetag: 06.03.1992
(51) Int. Cl.: B23K 26/08

(54) **Verfahren zum Laserschneiden und Laserschneidkopf**
Laser cutting method and laser cutting head
Procédé pour couper au laser et tête pour couper au laser

(30) Priorität: 15.03.1991 DE 4108542
(43) Veröffentlichungstag der Anmeldung: 16.09.1992
(73) Patentinhaber: Linde Aktiengesellschaft, 65189 Wiesbaden (DE)
(72) Erfinder: Herrmann, Johann, W-8044 Unterschleissheim (DE)
(74) Vertreter: Obermüller, Bernhard

(56) Entgegenhaltungen:
- EP-A- 0 452 785
- AT-B- 391 436
- DE-A- 3 826 634

## Beschreibung

Die Erfindung betrifft ein Verfahren zum Laserschneiden eines Werkstückes mit einem fokussierten Laserstrahl und einem Gasstrahl, die beide durch eine Schneiddüse geführt werden, wobei der Abstand zwischen Werkstück und Schneiddüse kapazitiv gesteuert wird (siehe z.B. AT-B-391 436) und wobei als Sensor für die kapazitive Abstandssteuerung ein gegenüber der Schneiddüse isolierter Sensorring eingesetzt wird Bei der Bearbeitung von Werkstücken mit Laserstrahlen wird durch eine Fokussierlinse der Laserstrahl auf die Werkstückoberfläche gebündelt, wodurch die zum Schneiden erforderliche Erwärmung erzielt wird. Zusätzlich wird ein Gasstrahl aus Schneidgas gegen die zu bearbeitende Werkstückoberfläche geleitet. Der fokussierte Laserstrahl und der Gasstrahl werden dabei gemeinsam durch eine Düse geführt. Die Schneiddüse ist in einem Laserschneidkopf eingebaut. Beim Laserschneiden ist eine genaue Einhaltung des Abstandes zwischen Werkstück und Schneiddüse zur Erlangung einer hohen Schnittqualität erforderlich. Es wird daher in der Regel eine kapazitive Abstandssteuerung eingesetzt. Da die metallische Schneiddüse zur Werkstückoberfläche den geringsten Abstand aufweist, dient sie als Sensor bei der kapazitiven Abstandssteuerung. Zur Isolation vom restlichen Laserschneidkopf wird die Schneiddüse in einer Düsenaufnahme aus Keramik gehalten.

Ein derartiger Laserschneidkopf mit keramischer Schneiddüsenaufnahme eignet sich jedoch nicht zum Hochdruckgasschneiden, da die Keramikkörper den hohen Drücken nicht standhalten. Deshalb können beim Hochdruckgasschneiden nur Laserschneidköpfe mit sehr viel kleineren Keramikkörpern und Schneiddüsen eingesetzt werden. Damit entsteht aber der wesentliche Nachteil, daß aufgrund der geänderten Kapazität der Schneiddüse ein Abgleich der Steuerung wegen der unterschiedlichen Schneidköpfe notwendig wird. Außerdem weist eine Verfahrensführung mit einer kleineren Schneiddüse den zusätzlichen Nachteil auf, daß die Regelung der kapazitiven Abstandssteuerung in diesem Fall wesentlich empfindlicher ist.

Aus der DE 28 29 851 A1 ist ein Verfahren zum Bearbeiten eines Werkstückes mittels Laserbrennschneiden bekannt, wobei zur kapazitiven Abstandsmessung an der Brennerdüse ein Ringkörper aus isolierendem Material wie Keramik vorgesehen ist und an der dem Werkstück zugewandten Seite des Ringkörpers eine als etwa kreisringförmige Scheibe ausgebildete Elekrode etwa parallel zum Werkstück angeordnet ist und die von heißen Brennergasen durchströmte Brennerdüse an ihrem unteren Ende konzentrisch umgibt. Neben der Elektrode als kapazitiver Fühlereinrichtung ist noch eine induktive Fühlereinrichtung, beispielsweise eine am unteren Ende der Brennerdüse angeordnete Spule, vorgesehen.

Der Erfindung liegt daher die Aufgabe zugrunde, ein Verfahren der eingangs genannten Art aufzuzeigen, welches ein Laserschneiden bei unterschiedlichen Schneidgasdrücken mit hoher Schnittqualität ermöglicht.

Diese Aufgabe wird erfindungsgemäß dadurch gelöst, daß eine Voreinstellung der Kapazität des Sensorringes und damit des vom Sensorring für einen bestimmten Abgleich der Steuereinheit abgegebenen Signales der kapazitiven Abstandssteuerung durch eine Veränderung des Zwischenraumes zwischen Sensorring und Schneiddüse erfolgt.

Der erfindungsgemäße Einsatz von einem gegenüber der Schneiddüse und dem restlichen Laserschneidkopf elektrisch isolierten Sensorring erlaubt nach einmaligem Abgleich der Steuereinheit des kapazitiven Abstandssteuersystems das Laserschneiden mit hoher Schnittqualität bei unterschiedlichen Schneidgasdrücken. Bei einem späteren Austausch der Schneiddüse erübrigt sich ein erneuter Abgleich der Steuerung. Der erfindungsgemäße, im Laserschneidkopf integrierte Sensor in Form eines Sensorringes, der die Schneiddüse umgibt, dient der kapazitiven Abtastung des Abstandes, wobei das vom Sensorring abgegebene Signal von der Regeleinheit nach einmaligem Abgleich der Steuereinheit verarbeitet werden kann, auch beispielsweise nach einem Austausch der Schneiddüse. Für die Isolierung des Sensorringes kann jedes geeignete Isolationsmaterial verwendet werden. Da die Isolierung nicht wie beim Verfahren nach dem Stand der Technik druckstabil ausgebildet sein muß, kann die Isolierung auch aus einem einfach herzustellenden und preiswerten Kunststoffring bestehen. Damit wird die Verwendung der vergleichsweise sehr teuren Keramik aus dem Verfahren nach dem Stand der Technik im erfindungsgemäßen Verfahren überflüssig.

Bei der erfindungsgemäßen kapazitiven Abstandssteuerung über einen Sensorring erfolgt eine Voreinstellung der Kapazität und damit des vom Sensorring abgegebenen Signales, auf das die Steuereinheit vor einer Werkstückbearbeitung abzugleichen ist, dadurch, daß der Abstand zwischen Schneiddüse und Sensorring verändert wird. Dies kann zum einen durch eine Variation der Isolatorstärke erreicht werden, aber auch mit besonderem Vorteil durch eine Änderung des Zwischenraumes zwischen Sensorring und der Düsenspitze (Düsenschneidkanal). Das bringt für das erfindungsgemäße Verfahren den wesentlichen Vorteil, daß das Verfahren in schon bestehenden Anlagen problemlos eingesetzt werden kann, da vom kapazitiven Abstandssteuerungssystem lediglich die Schneiddüse ausgetauscht werden muß. Denn bei einer Nachrüstung kann durch die erfindungsgemäße Variation des Zwischenraumes zwischen Sensorring und Schneiddüse, vorzugsweise der Düsenspitze, eine Voreinstellung der Kapazität des Systems Sensorring-Schneiddüse auf den Kapazitätswert der zu ersetzenden Schneiddüse erfolgen, so daß ein erneuter Abgleich der Steuereinheit auf diese Kapazität nicht mehr durchgeführt werden muß, sondern das vom Sensorring abgegebene Signal ohne weiteres von der Regeleinheit der kapazitiven Abstandssteuerung verarbeitet werden kann.

Im erfindungsgemäßen Verfahren mit kapazitiver Abstandssteuerung über einen Sensorring können Schneidgasdrücke von ca. 1 bis 25 bar eingesetzt werden, da sich die erfindungsgemäße Abstandssteuerung nicht mehr druckbegrenzend auswirkt wie beim Verfahren nach dem Stand der Technik. Vielmehr wird im erfindungsgemäßen Verfahren eine Entkopplung des Schneidgasdruckes von der Abstandssteuerung erreicht. Das erfindungsgemäße Verfahren eignet sich daher auch speziell für das Hochdruckgasschneiden mit einem Schneidgasdruck zwischen 15 und 20 bar, erlaubt aber sogar den Einsatz von Schneidgasdrücken über 25 bar.

Im erfindungsgemäßen Verfahren wird vorzugsweise Inertgas eingesetzt. Dabei sind alle für das Laserschneiden bekannten Inertgase verwendbar.

Der erfindungsgemäße Sensorring kann aus jedem in Hinblick auf seine elektromagnetischen Eigenschaften geeigneten Material bestehen. Bevorzugt wird der Sensorring aus Kupfer oder einer kupferhaltigen Legierung hergestellt.

Die Erfindung betrifft darüber hinaus einen Laserschneidkopf zur Durchführung des erfindungsgemäßen Verfahrens, an dessen Spitze eine Schneiddüse eingebaut ist, in den der parallel einfallende Laserstrahl durch eine Fokussierlinse auf das Werkstück gebündelt wird und in den das Schneidgas eingeleitet wird (siehe z.B. AT-B-391 436).

Erfindungsgemäß ist ein derartiger Laserschneidkopf dadurch gekennzeichnet, daß die Schneiddüse aus einer verstellbaren Düsenhalterung, einem Düsenkörper und einem Düsenschneidkanal besteht, daß am Düsenkörper ein Isolatorring und an diesem ein Sensorring befestigt ist, wobei diese Bauteile so angeordnet sind, daß der Sensorring nur den Isolatorring berührt, daß zwischen der Schneiddüse und dem Sensorring keine elektrisch leitende Verbindung besteht, daß der Düsenschneidkanal am Düsenkörper befestigt ist und daß der Düsenkörper von der Düsenhalterung gehalten wird.

Mit Vorteil besteht die Düsenhalterung aus mehreren gegeneinander beweglichen Teilen. Die Düsenhalterung ist drehbar und in jeder Stellung fixierbar, so daß der elektrische Anschluß des Sensorringes in die gewünschte Richtung gelegt werden kann.

Ein wesentlicher Vorteil des erfindungsgemäßen Laserschneidkopfes gegenüber einem herkömmlichen Laserschneidkopf besteht darin, daß das eigentliche Verschleißteil der Schneiddüse, der Schneidkanal, von den übrigen Bestandteilen der Schneiddüse baulich getrennt ist. Ein verschleißter Düsenkanal kann gegen einen neuen ausgetauscht werden, ohne daß die ganze Schneiddüse ersetzt werden muß und vor allem auch, ohne daß ein neuer Abgleich der Steuereinheit des kapazitiven Abstandssteuersystems erfolgen muß. Der erfindungsgemäße Schneidkopf ermöglicht aber auch, ohne einen Abgleich der Steuereinheit verschiedenartige Schneidkanäle, beispielsweise für strömungstechnisch unterschiedlich ausgebildete Schneidgasstrahlen, zu benutzen.

Die Erfindung sei im folgenden anhand eines Ausführungsbeispieles näher erläutert.

Hierbei zeigt:

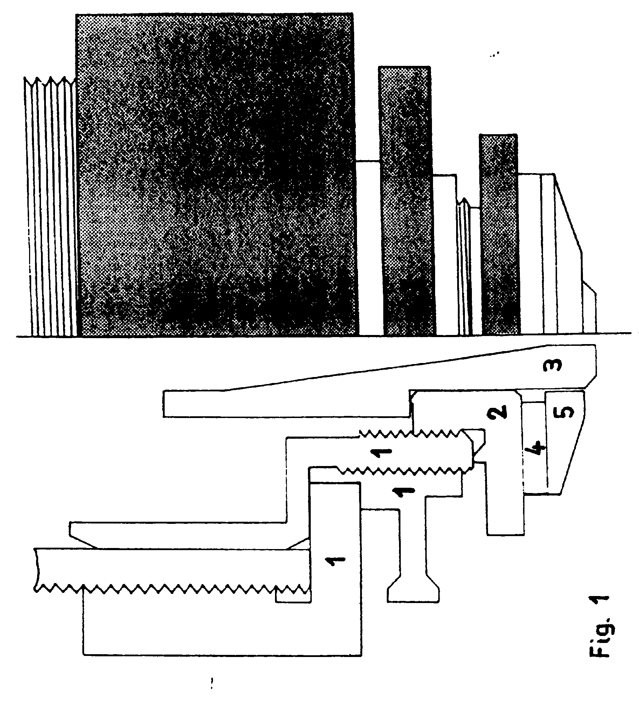

Figur 1 einen erfindungsgemäßen Laserschneidkopf.

Der in Figur 1 im Teilschnitt dargestellte Laserschneidkopf enthält eine dreiteilige Düsenhalterung 1, deren einzelne Bauteile gegeneinander beweglich sind. An der Düsenhalterung 1 ist der Düsenkörper 2 befestigt. In den Düsenkörper 2 ist der Düsenschneidkanal 3 eingelassen. Düsenhalterung 1, Düsenkörper 2 und Düsenschneidkanal 3 bilden zusammen die Schneiddüse (1, 2, 3). Am Düsenkörper 2 ist über einen Isolierring 4 der Sensorring 5 befestigt. Der Sensorring 5 ist dabei an der Seite des Laserschneidkopfes angebracht, die zum nicht dargestellten Werkstück zeigt. Zwischen Sensorring 5 und der Schneiddüse (1, 2, 3) besteht keine elektrisch leitende Verbindung. Durch die spezielle Wahl des Zwischenraumes, d.h. der Abmessung des Ringspaltes zwischen Sensorring 5 und Düsenschneidkanal 3 bei gegebener Dicke (Höhe) des Isolierringes 4 wird das Signal des Sensorringes 5 auf den Signalwert bzw. die Kapazität eingestellt, auf den bzw. auf die die Steuereinheit bereits abgeglichen wurde.

## Patentansprüche

1. Verfahren zum Laserschneiden eines Werkstückes mit einem fokussierten Laserstrahl und einem Gasstrahl, die beide durch eine Schneiddüse (1, 2, 3) geführt werden, wobei der Abstand zwischen Werkstück und Schneiddüse kapazitiv gesteuert wird und wobei als Sensor für die kapazitive Abstandssteuerung ein gegenüber der Schneiddüse isolierter Sensorring (5) eingesetzt wird,
**dadurch gekennzeichnet**,
daß eine Voreinstellung der Kapazität des Sensorringes (5) und damit des vom Sensorring für einen bestimmten Abgleich der Steuereinheit abgegebenen Signales der kapazitiven Abstandssteuerung durch eine Veränderung des Zwischenraumes zwischen Sensorring (5) und Schneiddüse (1, 2, 3) erfolgt.

2. Verfahren nach Anspruch 1, dadurch gekennzeichnet, daß das Schneidgas mit einem Druck von 1 bis 25 bar, vorzugsweise 15 bis 20 bar, durch die Schneiddüse (1, 2, 3) geleitet wird.

3. Verfahren nach einem der Ansprüche 1 oder 2, dadurch gekennzeichnet, daß als Schneidgas Inertgas verwendet wird.

4. Verfahren nach einem der Ansprüche 1 bis 3, dadurch gekennzeichnet, daß der Sensorring (5) aus Kupfer oder einer kupferhaltigen Legierung besteht.

5. Laserschneidkopf zur Durchführung des Verfahrens nach einem der Ansprüche 1 bis 4, an dessen Spitze eine Schneiddüse (1, 2, 3) eingebaut ist, in den der parallel einfallende Laserstrahl durch eine Fokussierlinse auf das Werkstück gebündelt wird und in den das Schneidgas eingeleitet wird, **dadurch gekennzeichnet**, daß die Schneiddüse (1, 2, 3) aus einer verstellbaren Düsenhalterung (1), einem Düsenkörper (2) und einem Düsenschneidkanal (3) besteht, daß am Düsenkörper (2) ein Isolatorring (4) und an diesem ein Sensorring (5) befestigt ist, wobei diese Bauteile so angeordnet sind, daß der Sensorring (5) nur den Isolatorring (4) berührt, daß zwischen der Schneiddüse (1, 2, 3) und dem Sensorring (5) keine elektrisch leitende Verbindung besteht, daß der Düsenschneidkanal (3) am Düsenkörper (2) befestigt ist und daß der Düsenkörper (2) von der Düsenhalterung (1) gehalten wird.

6. Laserschneidkopf nach Anspruch 5, dadurch gekennzeichnet, daß die Düsenhalterung (1) aus mehreren gegeneinander beweglichen Teilen besteht.

7. Laserschneidkopf nach einem der Ansprüche 5 oder 6, dadurch gekennzeichnet, daß der Düsenschneidkanal (3) auswechselbar ist.

## Claims

1. Method for the laser cutting of a workpiece using a focused laser beam and a gas jet, both of which are guided through a cutting nozzle (1, 2, 3), the distance between the workpiece and cutting nozzle being controlled capacitively, and a sensor ring (5) which is insulated from the cutting nozzle being used as the sensor for the capacitive distance control, characterized in that the capacitance of the sensor ring (5) and therefore of the signal for the capacitive distance control which is emitted by the sensor ring for a specific calibration of the control unit is preset by changing the space between sensor ring (5) and cutting nozzle (1, 2, 3).

2. Method according to Claim 1, characterized in that the cutting gas is guided through the cutting nozzle (1, 2, 3) at a pressure of from 1 to 25 bar, preferably 15 to 20 bar.

3. Method according to one of Claims 1 or 2, characterized in that inert gas is used as the cutting gas.

4. Method according to one of Claims 1 to 3, characterized in that the sensor ring (5) is made from copper or a copper-containing alloy.

5. Laser cutting head for carrying out the method according to one of Claims 1 to 4, at the tip of which a cutting nozzle (1, 2, 3) is fitted, in which the laser beam, which impinges in parallel, is focused onto the workpiece by a focusing lens and into which the cutting gas is introduced, characterized in that the cutting nozzle (1, 2, 3) comprises an adjustable nozzle holder (1), a nozzle body (2) and a nozzle cutting passage (3), in that an insulator ring (4) is attached to the nozzle body (2), and a sensor ring (5) is attached to the insulator ring, these components being arranged in such a way that the sensor ring (5) is in contact only with the insulator ring (4), that there is no electrically conductive connection between the cutting nozzle (1, 2, 3) and the sensor ring (5), that the nozzle cutting passage (3) is attached to the nozzle body (2), and that the nozzle body (2) is held by the nozzle holder (1).

6. Laser cutting head according to Claim 5, characterized in that the nozzle holder (1) comprises a plurality of parts which can move with respect to one another.

7. Laser cutting head according to one of Claims 5 and 6, characterized in that the nozzle cutting passage (3) is exchangeable.

## Revendications

1. Procédé pour le coupage au laser d'une pièce avec un faisceau laser focalisé et un jet de gaz, qui sont tous les deux conduits à travers un injecteur de coupe (1, 2, 3), dans lequel la distance entre la pièce et l'injecteur de coupe est pilotée par voie capacitive et dans lequel on utilise comme détecteur pour le pilotage capacitif de la distance une bague de détection (5) isolée par rapport à l'injecteur de coupe, caractérisé en ce que l'on opère un préréglage de la capacité de la bague de détection (5) et ainsi du signal du pilotage capacitif de la distance émis par la bague de détection pour une compensation déterminée de l'unité de pilotage par une modification de l'espace intermédiaire entre la bague de détection (5) et l'injecteur de coupe (1, 2, 3).

2. Procédé suivant la revendication 1, caractérisé en ce que le gaz de coupe est conduit à travers l'injecteur de coupe (1, 2, 3) avec une pression de 1 à 25 bar, de préférence de 15 à 20 bar.

3. Procédé suivant l'une quelconque des revendications 1 ou 2, caractérisé en ce que l'on utilise comme gaz de coupe un gaz inerte.

4. Procédé suivant l'une quelconque des revendications 1 à 3, caractérisé en ce que la bague de détection (5) est constituée de cuivre ou d'un alliage contenant du cuivre.

5. Tête de coupage au laser pour la mise en oeuvre du procédé suivant l'une quelconque des revendications 1 à 4, à la pointe de laquelle est monté un injecteur de coupe (1, 2, 3), dans laquelle le faisceau laser entrant parallèlement est focalisé sur la pièce au moyen d'une lentille de focalisation et dans laquelle le gaz de coupe est introduit, caractérisée en ce que l'injecteur de coupe (1, 2, 3) se compose d'un porte-injecteur réglable (1), d'un corps d'injecteur (2) et d'un canal de coupe de l'injecteur (3), en ce qu'une bague d'isolation (4) est fixée au corps d'injecteur (2) et à celle-ci une bague de détection (5), ces composants étant disposés de telle façon que la bague de détection (5) ne touche que la bague d'isolation (4), en ce qu'il n'existe aucune liaison électriquement conductrice entre l'injecteur de coupe (1, 2, 3) et la bague de détection (5), en ce que le canal de coupe de l'injecteur (3) est fixé au corps d'injecteur (2) et en ce que le corps d'injecteur (2) est supporté par le porte-injecteur (1).

6. Tête de coupage au laser suivant la revendication 5, caractérisée en ce que le porte-injecteur (1) se compose de plusieurs parties mobiles l'une par rapport à l'autre.

7. Tête de coupage au laser suivant l'une quelconque des revendications 5 ou 6, caractérisée en ce que le canal de coupe de l'injecteur (3) est interchangeable.
